# EUROPEAN PATENT APPLICATION

(11) **EP 4 534 166 A1**
(43) Date of publication of application: **09.04.2025**
(21) Application number: 24386113.5
(22) Date of filing: 23.09.2024
(51) Int. Cl.: B01B 1/00, B01F 23/50, B01J 8/00, C01F 5/40, C01G 51/10, C01G 53/10, C22B 1/00, C22B 3/08, C22B 3/22, C22B 23/00, C22B 3/00, C22B 26/22

(54) **METHOD FOR CONVERSION OF WATER-INSOLUBLE NICKEL MINERALS OF LATERITES INTO SOLID READILY SOLUBLE HYDRATED CRYSTALLINE SULFATES**

(30) Priority: 05.10.2023 GR 20230100810
(71) Applicant: Stampoliadis, Ilias, 34132 Chalkis (GR)
(72) Inventor: Stampoliadis, Ilias, 34132 Chalkis (GR)

(57) **Abstract**

The proposed method concerns the conversion of the water insoluble nickel bearing minerals of laterites into highly soluble solid hydrated sulfates which can then be dissolved in water and the nickel and cobalt recovered.

According to this method, the ore is in pulp after crushing or wet grinding; alternatively, only its fine fraction is taken after wet classification. The pulp is dewatered accordingly and concentrated sulfuric acid is added that reacts with the ore and creates soluble, hydrated crystalline sulfates of Fe²⁺, Fe³⁺, Al³⁺, Ni²⁺, Co²⁺, Mg²⁺ which absorb the water and the pulp solidifies. This solid, containing the soluble crystalline sulfates as well as the unreacted minerals is the final product of the process from which nickel and cobalt can be recovered by water dissolution.

## Description

The present invention relates to a hydrometallurgical method of laterites leaching for the recovery of nickel and cobalt through the conversion of their insoluble oxides into crystalline soluble sulfates.

Laterites are derived from the weathering of magnesium silicate minerals that contain nickel and cobalt. The minerals commonly found in them are mainly simple oxides such as quartz and hematite, iron hydroxides containing nickel and cobalt, complex oxides such as magnesium silicates containing nickel and cobalt. In smaller amounts there are chromite and calcite which is of secondary origin

Pyrometallurgical and hydrometallurgical methods are used to recover nickel and cobalt as well as their compounds from laterite deposits.

Pyrometallurgical plants produce ferronickel alloy and require relatively rich deposits due to the high operating costs as well as the required investments. With the exhaustion of the rich deposits, more economical hydrometallurgical methods have evolved for the poor deposits which leach laterite with some inorganic acid, separate the insoluble solids from the pregnant solution and from this, in various ways, recover the nickel and cobalt or compounds thereof. They usually use sulfuric acid solutions and the extraction is done under atmospheric pressure at temperatures lower than boiling or at higher pressures and temperatures in autoclaves.

Atmospheric extraction is usually done in stirred slurries that require fine-grained ore or in permeable piles where the ore is coarser-grained.

There are also hydrometallurgical methods in which the laterite ore is leached using concentrated sulfuric acid, the oxides and hydroxides reacting with it, are initially converted into solid hydrated crystalline sulfates which are then dissolved in water.

The conversion of the reactive oxides into solid hydrated sulfates can be done in a minimum time that is affected by the granulometry of the ore, the amount of water that should not exceed the stoichiometry and the amount of concentrated acid.

Examples of such methods are covered by the following patents.

USP 4,125,588 (1978): Refers to laterite rich in MgO 36% and poor in Fe 6.5% and Ni 0.7%. The ore is crushed and ground after drying and concentrated sulfuric acid is added to the ground ore, mixing is done and then an amount of water <10% is added, so the sulfidation reaction begins with the release of heat that raises the temperature. The reaction is complete in a few minutes and the product is a solid. It is then mixed with water in which the sulfates mainly of Mg²⁺, Fe²⁺, Ni²⁺, Co²⁺, Fe³⁺, Al³⁺ are dissolved. The insoluble solids are separated and Ni and Co are recovered from the pregnant solution. One of the disadvantages of this method is that in wet periods the cost of dry grinding is significant. Also due to dry grinding, the added acid must not contain water so that the reaction does not start at the stage of mixing it with the dry ground ore.

CN 106591579 A (2017): Here again the ore is dry ground and then NaF and water are added. Concentrated sulfuric acid is added after mixing with NaF and water. After the sulfidation reaction, the solid product is dissolved in water and the insoluble solids are separated. Ni and Co are recovered from the pregnant solution. The addition of NaF is intended to prevent the dissolution of Fe remaining in the insoluble solids by enriching the pregnant solution in Ni and Co from which they are precipitated as hydroxides by the addition of MgO emulsion.

EP 0 922685 A1 (1997): Although this work is unrelated to laterites, it is cited because it relates to the creation of a solid product of crystalline magnesium sulfate for agricultural use. As raw material this method uses residues and by-products from the magnesite industry such as magnesite, dolomite, caustic and deadburned magnesia dusts from air cyclones, etc. These materials are dry in nature, they are mixed and ground. Then the corresponding solution of sulfuric acid 60-96% and a corresponding amount of water is added to obtain the corresponding solid hydrate crystalline magnesium sulfate. This solid product, which also contains insoluble solids, is ground and shaped into 1-4 mm granules for use as a fertilizer in agriculture.

After these detailed descriptions where the ore is dry ground, the proposed invention is as follows. The laterite ore is wet crushed or ground in water in a closed circuit, which immediately differentiates it from the ones described that use dry grinding.

Grinding increases the specific surface area of the ore and accelerates the reaction of the nickel minerals, limonite and serpentine, with the acid that will be added at a later stage.

Next, the pulp is dehydrated by thickening or even partial filtration so that its moisture does not exceed the stoichiometry for the creation of solid crystalline sulfates. As an example, the reaction 1 of the acid with nickeliferous serpentine, which concerns bivalent metals, and the reaction 2 of the acid with nickeliferous limonite, which concerns trivalent metals respectively.

Mg₃Si₂O₅(OH)₄ + 3H₂SO4 + (3x-5)H₂O = 3MgSO4.xH₂O ... (1)

where Fe²⁺, Ni²⁺, Co²⁺ can take the place of Mg²⁺. x is the maximum number of crystal waters of the corresponding sulfate.

2FeO(OH).nH₂O + 3H₂SO₄ + (x-2n-5)H₂O = Fe₂(SO₄)₃.xH₂O ... (2)

Here the place of Fe³⁺ can be taken by Al³⁺.

The number of crystalline waters (x) ranges from 1 in kizerite (MgSO₄.H₂O), 7 in Epsomite (MgSO₄.7H₂O), 6 in (FeSO₄.6H₂O). Roughly depending on the composition of the ore, around 6 molecules of water are required per molecule of reactive sulfuric acid. In trivalent metals (x) can be up to 18 as in [Fe₂(SO₄)₃].18H₂O which again corresponds to 6 molecules of water per molecule of sulfuric acid that reacts with the ore. This water comes both from the water added to the reaction, and from the crystalline water of the ore, which is estimated from the loss on ignition of the ore.

If the molar ratio of total water to stoixiometrically required sulfuric acid does not exceed 6 then the final product of the reaction will always be a solid.

Let us consider a typical case of Greek laterite with sulfuric acid consumption of around 400 kg per dry ton of ore, of which at least 92% reacts, i.e. 368 kg of acid will react per ton of ore while the rest remains free. In this case the maximum water required for crystallization is 368x6x18/98=406 kg of water. 18 is the molecular weight of water and 98 of the acid.

If the ore has a loss on ignition 6.5% in crystalline water this corresponds to 65 kg of water per ton of ore and for the sulfidation reaction a maximum of 406-65=341 kg of additional fresh water per ton of dry ore is required. If this water is added to 1000 kg of ore the resulting pulp will have a total weight 1341 kg and a density of 1000/1341=0.75 or 75% solids. Pulp densities of this order of magnitude are easily achieved by thickening and filtration after wet milling of the ore.

This shows that it is technically possible to achieve the necessary pulp density using wet grinding of the ore as opposed to dry grinding which depending on weather conditions requires expensive drying of the ore, especially when it is of low nickel content <1%.

By adding sulfuric acid to the pulp after thickening, heat is released from the dissolution of the acid into the water, which increases the temperature and favors the sulfidation reaction. The increase in temperature depends on the density of the pulp in solids and increases as it is higher (less added water). The reaction time to solidify the pulp depends on the nature of the ore, the particle size the density of the pulp and can vary from a few minutes to a few hours.

The final solid product of the reaction, consisting of the formed easily soluble crystalline hydrated sulfates and the insoluble solids that did not react, is immersed in water where the sulfates of nickel, cobalt and the other metals that reacted are dissolved.

The unreacted solids are then separated from the pregnant solution. The solids are washed and the washing water is recycled to the dissolution, while the pregnant solution goes to the recovery of nickel, cobalt or the other compounds dissolved in it, such as e.g. magnesium sulfate.

Today there are facilities where the leaching of laterite ore is done in heaps where, the extraction is time-consuming and also in many cases there are problems due to poor permeability of the heap due to the fine grains of the ore. The method described above can help in existing as well as in new installations as follows.

Before depositing the ore in a heap, it undergoes wet classification so that the fine grains are drawn into the pulp, while the coarse ones will be used to create the heap with satisfactory permeability. Subsequently, the pulp containing the fine fraction of the ore is dewatered to the stoichiometric water and then, with the addition of concentrated sulfuric acid, solidifies into easily soluble sulfates from which the nickel and cobalt are recovered after dissolving them in water. In this case no grinding facility is required.

Finally, depending on the recovery method of nickel and cobalt from the pregnant solution and in case the ferric iron and aluminum are precipitated as zarosite and alunite, it may be appropriate to dissolve the sulfates into sea water if available.

Having described the method of converting the water insoluble nickel minerals of laterites into solid highly soluble hydrated crystalline sulfates one can see its advantages over other hydrometallurgical methods of laterite leaching.

Regarding the leaching methods with an excess of water either under atmospheric pressure or in autoclaves, where after the addition of the acid the produced sulfates are in solution, there is the advantage that in the present method due to the small amount of water, which has a high specific heat, the energy produced by dissolving the acid in the water raises the temperature to higher levels, speeds up the sulfidation reaction, and no external heating is needed.

The reaction time is shorter due to the high concentration of sulfuric acid, which increases the plant's output, especially in contrast to heap leaching. In contrast to the other methods described at the beginning, in which the ore is dried before grinding and the sulfidation product is also solid, the advantage is that it does not require additional energy for drying. In the present case, the difference is clear since the grinding is wet, with lower operating costs and lower capital investments, while the control of the amount of water is done after wet grinding by thickening and filtration that can limit the water to the desired levels with much less capital and operating cost than that of drying.

## Claims

1. A method of converting the water-insoluble nickel minerals of laterites into solid soluble crystalline sulfates. This method includes the following steps.
1a) The laterite ore is in water pulp and in a grain size that satisfies the desired speed of its reaction with the sulfuric acid that will be added afterwards.
1b) The pulp is thickened if necessary by a dehydration process so that the remaining water together with the crystal water of the minerals present in the ore does not exceed, preferably less, than the stoichiometrically required water to create the hydrated crystalline sulfates of the metals that are dissolved with the subsequent addition of concentrated sulfuric acid.
1c) An amount of concentrated sulfuric acid (96-98%) is added to the concentrated pulp capable of reacting with the minerals soluble in it and turning them into hydrated crystalline sulfates without the unnecessary creation of free acid, keeping the ratio of nickel, cobalt recovery to consumption of acid in an economically optimal level. With the addition of the acid, the temperature increases and in a short time, which depends on the nature and grain size of the ore, the pulp solidifies as the calculated pulp water is converted into crystalline water of the sulfates that are created.
1d) The solid product, containing the easily soluble hydrated crystalline sulfates and the insoluble solids, is the final product of the method. From this product, after adding the necessary amount of water, the readily soluble hydrated sulfates are dissolved. After the separation of the insoluble solids from the pregnant solution, nickel and cobalt as well as other compounds such as e.g. magnesium sulfate can be recovered with already existing methods.

2. A method according to claim (1) wherein the ore in the step (1a) has obtained the desired grain size after breaking and wet grinding the original run of mine ore. After that the pulp follows steps (1b), (1c) and (1d).

3. A method according to claim (1) wherein the ore in the pulp of step (1a) has obtained the desired grain size, after an initial crushing of the original run of mine ore, is wet classified at a finer desired size. The coarse fraction of the classification is available for another use e.g. heap leaching which determines its size at the initial crushing stage, while the pulp of the fine fraction follows steps (1b), (1c) and (1d).
